# EUROPÄISCHE PATENTANMELDUNG

(11) **EP 1 527 682 A1**
(43) Veröffentlichungstag der Anmeldung: **04.05.2005**
(21) Anmeldenummer: 04025365.0
(22) Anmeldetag: 26.10.2004
(51) Int. Cl.: A01M 1/20, A01M 25/00, A01G 13/10, A01M 23/02

(54) **Schnecken-Sammeleinrichtung**

(30) Priorität: 28.10.2003 DE 20316529 U
(71) Anmelder: Bredlow, Johann, 64665 Alsbach-Hähnlein (DE)
(72) Erfinder: Bredlow, Johann, 64665 Alsbach-Hähnlein (DE)
(74) Vertreter: Helber, Friedrich G., Dipl.-Ing.

(57) **Zusammenfassung**

Schnecken-Sammeleinrichtung (12) mit einem in von Schneckenfraß bedrohten gärtnerisch oder landwirtschaftlich genutzten Bodenarealen aufstellbaren Gehäuse.

Die Einrichtung umfasst einen an der Oberseite (14) geschlossenen, mit einer Außenwandung (22) und einer im gefährdeten Bodenareal auf dem Erdboden aufsetzbaren Bodenfläche (16) versehenen Gehäusekörper (12). Der Gehäusekörper ist in der Unterseite mit einem Hohlraum versehen, der in der bestimmungsgemäß auf dem Erdboden aufgesetzten Position über wenigstens eine offen in der Außenwandung (16) mündende Verbindung von der Außenseite her zugänglich ist. Der Gehäusekörper (12) ist dabei aus einem den Hohlraum (18) gegen klimatische und/oder witterungsbedingte Einflüsse schützende bzw. isolierende und zumindest für einen bestimmten Zeitraum witterungsbeständigen Material hergestellt.

## Beschreibung

Die Erfindung betrifft eine Schnecken-Sammeleinrichtung mit einem in von Schneckenfraß bedrohten, gärtnerisch oder landwirtschaftlich genutzten Bodenarealen aufstellbaren Gehäuse.

Sowohl im landwirtschaftlichen und gärtnerischen Pflanzenanbau als auch in privaten Nutz- und Ziergärten führt Schneckenfraß zu Verlusten des Ertrags und somit wirtschaftlichen Einbußen und zu Verärgerungen der Gartenbesitzer. Zur Bekämpfung von Schneckenfraß sind einerseits flächig auszustreuende chemisch wirksame Präparate (Schneckenkorn) entwickelt worden, welche die Schnecken einerseits anlocken und dann bei Kontakt zu Schleimverlust und Austrocknung und somit der Abtötung der Schnecken führen. Grundsätzlich können die in diesen Präparaten enthaltenen Wirkstoffe aber auch andere Insekten und Kleinlebewesen schädigen und sich - zumindest bei unsachgemäßer Anwendung - in unerwünschter Weise im Boden anreichern.

Zur Schneckenbekämpfung wurden deshalb auch so genannte Schneckenfallen in Form von bündig mit der Bodenoberfläche vertieft im Boden einzusetzende, an der Oberseite offenen Gehäusen mit glatten Innenwänden entwickelt, in welche als Lockstoff für die Schnecken Bier eingefüllt werden muss. Um die Füllung gegen Verdünnung durch Regen oder Gießwasser aber auch gegen Verschmutzung durch auffallendes Laub etc. zu schützen, weisen diese Schneckenfallen in der Regel einen mit Abstand oberhalb des Gehäuses gehaltenes, über den Umfang des Gefäßes vortretendes Schutzdach auf. Die Schnecken werden durch das im Gehäuse enthaltene Bier angelockt, kriechen ins Gehäuse und ertrinken in dem als Lockstoff verwendeten Bier. Eine ständige Überwachung der Bierfüllung im Gehäuse und eine Entfernung der Reste der Schneckenkadaver zusammen mit der verbliebenen Bierfüllung ist erforderlich. Durch Verwendung von Lockstoffen haben diese Fallen - ebenso wie bei Verwendung der eingangs erwähnten chemisch wirksamen Präparate - den zusätzlich Nachteil, dass auch Schnecken aus Nachbarbereichen angelockt werden, welche vor dem Erreichen der Falle oder Kontakt mit dem Bekämpfungspräparat zusätzlichen Schneckenfraß verursachen können.

Der Erfindung liegt demgegenüber die Aufgabe zugrunde, eine Einrichtung zur Bekämpfung von Schneckenfraß zu schaffen, welche einfach und preiswert herstellbar ist und ohne die Verwendung von schädlichen oder ständig zu ergänzenden Lockstoffen das Sammeln und Vernichten von Schnecken ermöglicht.

Diese Aufgabe wird erfindungsgemäß gelöst, durch einen an der Oberseite geschlossenen, mit einer Außenwandung und einer im gefährdeten Bodenareal auf dem Erdboden aufsetzbaren Bodenfläche versehenen Gehäusekörper, welcher in der Unterseite mit einem Hohlraum versehen ist, der in der bestimmungsgemäß auf dem Erdboden aufgesetzten Position über wenigstens eine offen in der Außenwandung mündende Verbindung von der Außenseite her zugänglich ist, wobei der Gehäusekörper aus einem den Hohlraum gegen klimatische und/oder witterungsbedingte Einflüsse schützende bzw. isolierende und zumindest für einen bestimmten Zeitraum witterungsbeständigen Material hergestellt ist. Da Schnecken zu etwa 85 % aus Wasser bestehen und keine sie vor Verdunstung schützende Haut aufweisen, sind Schnecken während ihrer Aktivitätszeiten, aber auch in den Ruhepausen dauernd der Gefahr des Austrocknens ausgesetzt, ausgenommen dann, wenn die Luftfeuchtigkeit der Umgebung bei oder in der Nähe von 100 % liegt. Nacktschnecken sind daher darauf angewiesen, dass sie ständig - über ihre Oberfläche, aber auch durch Trinken und mit der Nahrung - Wasser aufnehmen können. Ist dies witterungsbedingt nicht möglich, müssen die Schnecken sich an einen Ort zurückziehen, an welchen eine das Austrocknen verhindernde feuchte Atmosphäre herrscht. Gehäuseschnecken können sich hierzu in ihr Gehäuse zurückziehen, während insbesondere kleinere Nacktschnecken sich in den Boden oder auch in weitgehend abgeschlossenen Ritzen oder Spalten unter Steinen oder Bauten zurückziehen, in denen eine hinreichende Restfeuchte gegeben ist. Der erfindungsgemäße Schneckensammler trägt diesen Bedingungen Rechnung, indem er einen geschützten und isolierten, durch weitgehenden Abschluss nach außen jedoch gegen Wärme und insbesondere Feuchtigkeitsverlust geschützten Hohlraum anbietet, in welchen sich die Schnecken zurückziehen können. Durch einfaches Anheben der Sammeleinrichtung und Ablesen der Schnecken können diese dann entfernt werden, wobei die Sammeleinrichtung witterungsbeständig ausgebildet werden kann. Außerdem ist sie umweltfreundlich, weil keinerlei Chemikalien (Schneckenkorn, Salz etc.) oder andere Lockstoffe (Bier) zum Einsatz kommen.

Die erfindungsgemäße Sammeleinrichtung weist vorzugsweise mehrere, in Umfangsrichtung ihrer Außenwandung winkelversetzte Verbindungen zum Hohlraum auf, um kurze Kriechwege für die sich aus unterschiedlichen Richtungen nähernden im Hohlraum Schutz suchenden Schnecken zu bieten. Dabei sind die Verbindungen dann zweckmäßig in gleichmäßigen Winkelabständen versetzt vorgesehen.

Die Verbindungen werden dabei zweckmäßig als in der Bodenfläche des Gehäuses offen mündende vertiefte Kanäle ausgebildet, welche von der Außenwandung bis zum Hohlraum durchgehend und vorzugsweise geradlinig verlaufen. Die Höhe der Kanäle ist zweckmäßig geringer als der für die Aufnahme einer Vielzahl von Schnecken zu bemessende Hohlraum bemessen, und zwar in solcher Höhe, dass die anzulockenden Schnecken gerade einen Durchlassquerschnitt vorfinden, welcher den Zugang zum Hohlraum nicht beeinträchtigt. Der Gehäusekörper selbst kann als geometrischer Körper unterschiedlicher Form, beispielsweise als niedriger Zylinder oder Kegelstumpf oder pyramidenförmig oder in der Draufsicht lang gestreckt, quadratisch, oval, polygonal, kreuzförmig etc. ausgebildet sein.

Der Gehäusekörper wird vorzugsweise aus einem thermisch isolierenden und zweckmäßig zusätzlich für Feuchtigkeit undurchlässigen Kunststoff hergestellt, wobei sich die Herstellung des Gehäusekörpers aus einem geschlossenzelligen Schaumkunststoff, und hier wiederum aus einem Hartschaum-Kunststoff, vorzugsweise auf der Basis von ausgeschäumtem Polystyrol bewährt hat.

Die Erfindung ist in der folgenden Beschreibung eines Ausführungsbeispiels in Verbindung mit der Zeichnung näher erläutert, und zwar zeigt:

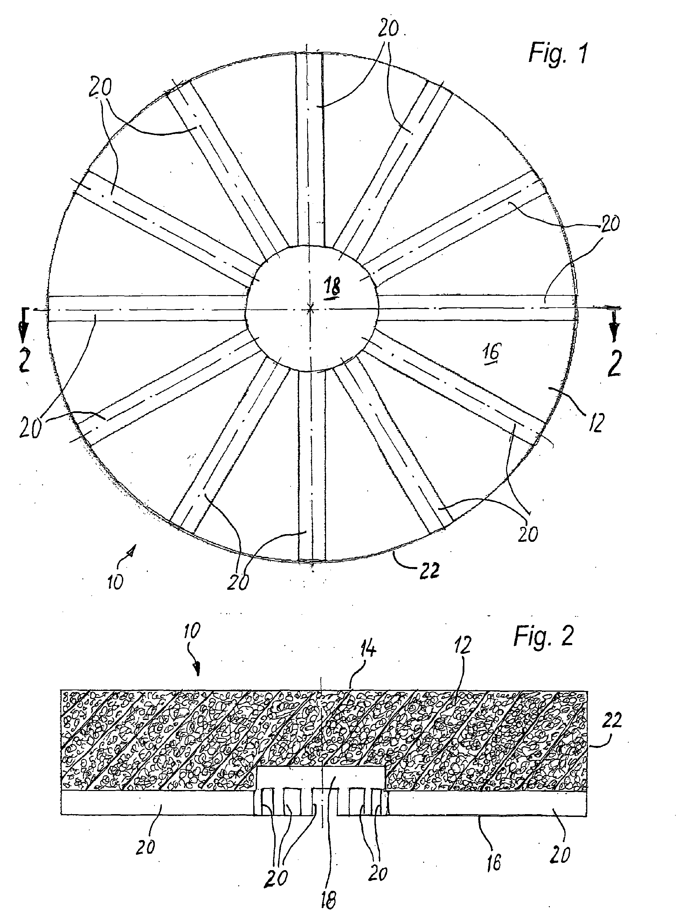

- Fig. 1: eine Unteransicht eines Ausführungsbeispiels einer aus Polystyrol-Hartschaum hergestellten erfindungsgemäßen Sammeleinrichtung für Schnecken; und
- Fig. 2: eine Schnittansicht, gesehen in Richtung der Pfeile 2-2 in Fig. 1.

Das in den Zeichnungsfiguren gezeigte, in seiner Gesamtheit mit 10 bezeichnete Ausführungsbeispiel einer erfindungsgemäßen Schnecken-Sammeleinrichtung weist einen Gehäusekörper 12 aus einem geschlossenzelligen Hartschaum-Kunststoff, z.B. aus geschäumtem Polystyrol auf, der im speziellen Fall die Form eines in der Draufsicht kreisförmig begrenzten niedrigen zylindrischen Körpers mit geschlossener Oberseite 14 hat. In die der geschlossenen Oberseite 14 gegenüberliegende grundsätzlich ebenflächige Unterseite 16 ist mittig ein nach unten offener kreisförmig begrenzter Hohlraum 18 eingeformt, der sich etwa über die halbe Höhe des Grundkörpers 12 erstreckt.

Der Hohlraum 18 ist über eine Anzahl von geradlinig radial verlaufenden, in gleichmäßigen Winkelabständen zueinander versetzten unterseitig offenen Kanälen 20 mit der zylindrischen Außenwand 22 des Gehäusekörpers 12 verbunden. Diese Kanäle 20 haben in der bestimmungsgemäß auf dem Erdboden aufgesetzten Position jeweils ein rechteckigen oder quadratischen lichten Durchgangsquerschnitt, welcher in der Höhe und Breite so gewählt ist, dass sie einen Durchgang für die im Hohlraum zu sammelnden Schnecken bieten.

Es ist ersichtlich, dass im Rahmen des Erfindungsgedankens Abwandlungen und Weiterbildungen des vorstehend beschriebenen Ausführungsbeispiels verwirklichbar sind, die sich beispielsweise auf die geometrische Form des oder das für den Gehäusekörper verwendete Material beziehen. Anstelle der zylindrischen Gehäuseform kommen hier auch andere geometrische Körper, wie Kuben, Quadrate, Polygone etc. in Frage. Anstelle des speziell angesprochenen Polystyrol-Hartschaums können auch andere die gewünschten isolierenden Eigenschaften aufweisende Materialien Verwendung finden. Auch die Herstellung aus einer äußeren Schale aus Blech oder dgl., die dann zusätzlich im Innern mit Isolierstoffen belegt ist, ist möglich. Wesentlich ist, dass ein auf dem Erdreich aufsetzbarer witterungsbeständiger und Wärme isolierender sowie für Feuchtigkeit und Nässe undurchdringlicher Gehäusekörper mit einem an der Unterseite offenen, zur Aufnahme der angezogenen Schnecken dienender Hohlraum vorgesehen ist, welcher über vom Hohlraum zur Außenseite führende Verbindungskanäle oder -öffnungen für die Schnecken von der Außenseite her zugänglich und leicht vom Boden abhebbar ist, um die im Hohlraum gesammelten Schnecken zu entfernen.

## Patentansprüche

1. Schnecken-Sammeleinrichtung mit einem in von Schneckenfraß bedrohten, gärtnerisch oder landwirtschaftlich genutzten Bodenarealen aufstellbaren Gehäuse,
**gekennzeichnet durch**
einen an der Oberseite (14) geschlossenen, mit einer Außenwandung (22) und einer im gefährdeten Bodenareal auf dem Erdboden aufsetzbaren Bodenfläche (16) versehenen Gehäusekörper (12), welcher in der Unterseite mit einem Hohlraum (18) versehen ist, der in der bestimmungsgemäß auf dem Erdboden aufgesetzten Position über wenigstens eine offen in der Außenwandung (16) mündende Verbindung von der Außenseite her zugänglich ist, wobei der Gehäusekörper (12) aus einem den Hohlraum (18) gegen klimatische und/oder witterungsbedingte Einflüsse schützende bzw. isolierende und zumindest für einen bestimmten Zeitraum witterungsbeständigen Material hergestellt ist.

2. Schnecken-Sammeleinrichtung nach Anspruch 1, **dadurch gekennzeichnet, dass** mehrere, vorzugsweise in Umfangsrichtung der Außenwandung (22) des Gehäusekörpers (12) winkelversetzte Verbindungen zum Hohlraum (18) vorgesehen sind.

3. Schnecken-Sammeleinrichtung nach Anspruch 2, **dadurch gekennzeichnet, dass** die Verbindungen in gleichmäßigen Winkelabständen versetzt in der Außenwandung (22) des Gehäusekörpers (12) münden.

4. Schnecken-Sammeleinrichtung nach Anspruch 2 oder 3, **dadurch gekennzeichnet, dass** die Verbindungen als zur Bodenfläche (16) des Gehäusekörpers (12) offene vertiefte Kanäle (20) ausgebildet sind.

5. Schnecken-Sammeleinrichtung nach Anspruch 4, **dadurch gekennzeichnet, dass** die Kanäle (20) geradlinig von der Außenwandung (22) zum Hohlraum (18) verlaufen.

6. Schnecken-Sammeleinrichtung nach Anspruch 4 oder 5, **dadurch gekennzeichnet, dass** der Hohlraum (18) eine größere Höhe als die Kanäle (20) aufweist.

7. Schnecken-Sammeleinrichtung nach einem der Ansprüche 1 bis 6, **dadurch gekennzeichnet, dass** der Gehäusekörper (12) die Form eines regelmäßigen geometrischen, vorzugsweise bezogen auf eine senkrechte Längsmittelachse symmetrischen Körpers hat.

8. Schnecken-Sammeleinrichtung nach Anspruch 7, **dadurch gekennzeichnet, dass** der Gehäusekörper (12) zylindrisch oder kegelstumpfförmig geformt ist.

9. Schnecken-Sammeleinrichtung nach einem der Ansprüche 1 bis 8, **dadurch gekennzeichnet, dass** der Gehäusekörper (12) zumindest überwiegend aus einem thermisch isolierenden Kunststoff hergestellt ist.

10. Schnecken-Sammeleinrichtung nach Anspruch 9, **dadurch gekennzeichnet, dass** der Gehäusekörper (12) ganz oder zumindest teilweise aus einem geschlossen Hartschaum-Kunststoff hergestellt ist.

11. Schnecken-Sammeleinrichtung nach Anspruch 10, **dadurch gekennzeichnet, dass** der Gehäusekörper (12) aus einem Hartschaum-Kunststoff, vorzugsweise auf der Basis von aufgeschäumtem Polystyrol hergestellt ist.
